# EUROPÄISCHE PATENTSCHRIFT

(11) **EP 3 175 939 B1**
(45) Veröffentlichungstag und Bekanntmachung des Hinweises auf die Patenterteilung: **23.09.2020**
(21) Anmeldenummer: 15197202.3
(22) Anmeldetag: 01.12.2015
(51) Int. Cl.: B22D 2/00, B22D 41/08, B22D 41/22, B22D 41/24, B22D 41/36, B22D 41/60

(54) **SCHIEBEVERSCHLUSS AM AUSGUSS EINES METALLURGISCHEN GEFÄSSES**
SLIDING CLOSURE AT THE SPOUT OF A METALLURGICAL VESSEL
SYSTEME DE FERMETURE COULISSANTE AU NIVEAU D'UNE BUSETTE D'UN RECIPIENT METALLURGIQUE

(43) Veröffentlichungstag der Anmeldung: 07.06.2017
(73) Patentinhaber: Refractory Intellectual Property GmbH & Co. KG, 1100 Wien (AT)
(72) Erfinder: Vukovic, Goran Dr., AT-1210 Wien (AT); Gamweger, Klaus, AT-8793 Trofaiach (AT); Zivanovic, Bojan, AT-1100 Wien (AT)
(74) Vertreter: Luchs, Willi

(56) Entgegenhaltungen:
- EP-A1- 0 198 910
- EP-A1- 0 300 150
- EP-A1- 0 942 796
- EP-A1- 2 366 474
- DE-A1- 19 644 345
- JP-A- S5 930 468

## Beschreibung

Die Erfindung betrifft einen Schiebeverschluss am Ausguss eines metallurgischen Gefässes nach dem Oberbegriff des Anspruchs 1.

Ein derartiger Schiebeverschluss ist in der Druckschrift EP 2 318 559 zum Beispiel an einem Anodenkupfer-Ofen geoffenbart. Darin wird Kupferschmelze mittels Flammraffination zu Anodenkupfer gereinigt und anschliessend das Kupfer in Anodenform abgegossen, wobei die Durchflussgeschwindigkeit des Kupfers durch Steuern der Ausflussmenge mit dem am Ausgussende angeordneten Schiebeverschluss geregelt wird. Dadurch kann der Giessvorgang ohne Nachdrehen der Ofentrommel durchgeführt werden. Es ist jedoch bei einem solchen Ofen von Nachteil, dass bei geschlossenem oder stark gedrosseltem Schiebeverschluss die im Ausgusskanal befindliche Schmelze einfrieren kann und die Funktionsfähigkeit des Abgiessens so beeinträchtigt wird, dass der Betrieb der Anlage unterbrochen wird.

Bei gewissen metallurgischen Öfen ist vorgesehen, den Ausgangskanal des Ausgusses mit einer Stopfmasse bei dem im Betrieb mit Schmelze enthaltendem Ofen geschlossen zu halten, dies bevor das Abgiessen erfolgt. Folglich muss diese Stopfmasse aus dem Ausgangskanal ausgebohrt und das darin eingefrorene Schmelze und/oder Schlacke mit einer Lanze aufgeschmolzen werden. Dies führt in der Regel zum unkontrollierten und schnellen Verschleiss der den Ausguss bildenden Feuerfest-Materialien.

Gemäss der Druckschrift JP-A-S59 30468 ist ein Schiebeverschluss mit einer Schieberplatte und einer stationären Platte und oberhalb diesen eine sich primär in der Ausmauerung einer Pfanne befindlichen Hülse offenbart. Eine Induktionsspule ist am Umfang dieser Hülse angeordnet, welche von einer Kassette ummantelt ist, die ebenfalls weitgehend in der Pfannenausmauerung angeordnet ist. Bei einer Stromversorgung dieser Induktionsspule mit Wechselstrom wird verfestigter Stahl in der Hülse geschmolzen und es soll damit ein Clogging in derselben verhindert werden, ohne dass der flüssige Stahl kontaminiert wird. Nachteilig bei dieser oberhalb des Schiebeverschlusses befindlichen und sich primär in der Pfannenausmauerung befindlichen Induktionsspule ist die starke Erwärmung derselben, weil diese sich bis nahe an das Pfanneninnere erstreckt, in der die heisse Schmelze enthalten ist. Damit ist die Lebensdauer und Funktionstauglichkeit dieser Spule sehr beschränkt.

Der Erfindung liegt die Aufgabe zugrunde, diese Nachteile zu vermeiden und einen Schiebeverschluss für ein metallurgisches Gefäss der eingangs genannten Art zu schaffen, der die volle Funktionsfähigkeit des Gefässes während des gesamten Abgiessvorgangs gewährleistet.

Diese Aufgabe ist erfindungsgemäss durch die Merkmale des Anspruchs 1 gelöst.

Auf diese Weise ist es möglich, die im Ausgangskanal des Ausgusses befindliche Schmelze stets so warm zu halten, dass sie vor und/oder während dem Abgiessen der Schmelze nicht einfriert bzw. dass das allenfalls eingefrorene Metall und/oder Schlacke im Ausguss aufgeschmolzen werden kann.

Dementsprechend kann bereits vor dem Abgiessen bei geschlossenem Schiebeverschluss die im Ausgangskanal gefrorene Schmelze und/oder Schlacke mit der Induktionsspule aufgeschmolzen werden. Dadurch wird der gesamte Giessvorgang sicherer durchgeführt und dabei besser steuer- bzw. kontrollierbar sein und zudem wird eine längere Haltbarkeit der Feuerfest-Materialien des Ausgusses erreicht. Auf diese Weise kann auf ein Verwenden von Stopfmasse und ihrer Ausbohrung bzw. auf ein Aufschmelzen von eingefrorener Schmelze oder Schlacke mit einer herkömmlichen Lanze verzichtet werden.

Die Erfindung sieht auch vor, dass sich die Induktionsheizung aus einer den Ausguss umgebenden Induktionsspule und einem diese umfassenden Kühlsystem zusammensetzt. Mit dieser Massnahme wird verhindert, dass die Induktionsspule durch die Ausmauerung bzw. der Aussenmantel des Ofens und der im Betrieb heisslaufende Schiebeverschluss aufgeheizt wird.

Um die Heizleistung der Induktionsspule möglichst verlustarm auf den Abgusskanal zu konzentrieren, sieht die Erfindung vor, dass die Induktionsspule in einem Tragkörper aus ferritischem Material eingebettet ist und das Kühlsystem mit einer den Tragkörper peripherisch umschliessenden Kühlkammer sowie einer an der zum Ofen hin gerichteten Seitenwand des Tragkörpers angrenzenden Kühlkammer versehen ist.

Mit dem Kühlsystem der Induktionsspule ergibt sich ein weiterer Vorteil, dass auch eine gezielte Erstarrung der Schmelze oder Schlacke im Ausguss eines Ofens bei geschlossenem Schiebeverschluss ermöglicht wird. Dies kann beispielsweise als Durchbruchsicherung dienen, um zwischen zwei Giessvorgängen einen sicheren Betrieb eines Ofens zu gewährleisten, was bei gewissen metallurgischen Öfen wichtig sein könnte, beispielsweise wenn sein Ausguss während des Betriebs unterhalb des Badniveaus liegt.

Erfindungsgemäss ist der Tragkörper mit den ihn umgebenden Kühlkammern in einer an dem Stahlmantel befestigten Tragplatte eingebaut, wobei zwischen ihr und dem Schiebeverschluss ein sich gegen den Tragkörper der Induktionsspule abstützender Distanzring beispielsweise aus Kupfermaterial eingelegt ist. Der Schiebeverschluss bzw. die Feuerfestmaterialien am Ausguss können dadurch getrennt von der Baueinheit bestehend aus dem Tragkörper, der Induktionsspule und den Kühlkammern ein- und ausgebaut werden.

Der Ausguss besteht erfindungsgemäss aus einem in der feuerfesten Ofenauskleidung angeordneten Lochstein und einer mit ihm verbundenen und den Ausgangskanal des Ausgusses bildenden Innenhülse aus feuerfestem Material, die im Bereich der Induktionsspule mit einem ringförmigen Einsatz aus Graphit oder graphithaltigem Material versehen ist. Die passenden elektrischen und thermischen Eigenschaften des Graphits erhöht die Heizwirkung der Induktionsspule auf die im Ausgusskanal befindliche Schmelze.

Die Innenhülse ist im Bereich des Graphiteinsatzes mit einer die Innenfläche des Einsatzes schützenden Hartschicht versehen, beispielsweise aus Tonerdematerial oder SiC. Dadurch wird verhindert, dass die abfliessende Schmelze und/oder die Schlacke und/oder oxidierendes Gas, wie zum Beispiel Luft, den Graphiteinsatz angreifen kann. Dieser Schutzeffekt kann auch auf die gesamte Innenhülse ausgedehnt werden, indem die Hartschicht über den Einsatz hinaus verlängert wird.

Die Erfindung wird nachfolgend anhand eines Ausführungsbeispiels unter Bezugnahme auf die Zeichnung näher erläutert. Es zeigen:
- Fig. 1: einen teilweisen Querschnitt bzw. eine Teilansicht eines erfindungsgemässen Schiebeverschlusses sowie den Ausguss eines Kupfer-Anodenofens;
- Fig.2: einen vergrösserten schematischen Querschnitt durch eine Induktionsheizung des Schiebeverschlusses nach Fig. 1, und
- Fig. 3: einen erfindungsgemässen Kupfer-Anodenofen mit einer Einrichtung, perspektivisch dargestellt.

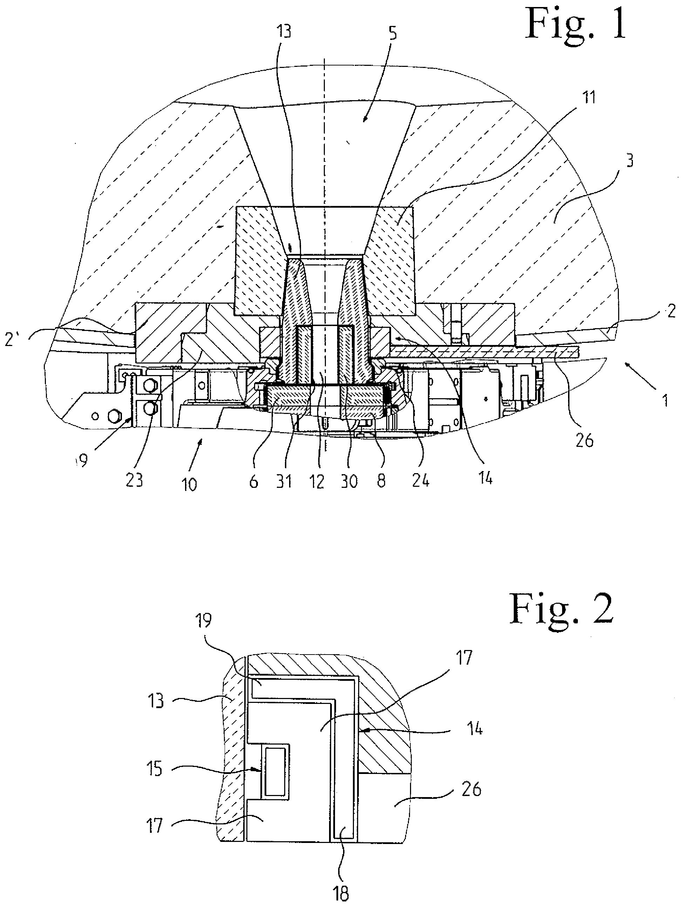

Fig. 1 zeigt einen Schiebeverschluss 10 an einem Ausguss 5 eines metallurgischen Ofens, vorzugsweise eines Kupfer-Anodenofens 1, welcher einen äusseren Stahlmantel 2 und einer feuerfesten Auskleidung 3 umfasst. In der Auskleidung 3 ist dieser Ausguss 5 radial nach aussen verlaufend mit einem Lochstein 11 mit der Auslassöffnung 12 gebildet.

Anstelle eines Kupfer-Anodenofens könnten auch andere Gefässe mit dem Schiebeverschluss oder einer gleichsamen Schliessvorrichtung vorgesehen sein, wie zum Beispiel ein Konverter mit einem Abstich, der aus mehreren aneinandergereihten Hülsen ohne Lochstein gebildet ist, ein Flash Smelting Ofen, ein Elektro-Schmelzofen oder ähnliche metallurgische Gefässe.

Der Schiebeverschluss 10 ist auf herkömmliche Weise ausgebildet, von dem nicht alle Details dargetan sind. Namentlich ist bei diesem ein an der Aussenseite des Ofens befestigtes Gehäuse 9 vorgesehen, in welchem wenigstens eine feuerfeste Verschlussplatte 6 eingelegt sowie eine oberhalb dieser anschliessenden Innenhülse 13 lösbar befestigt ist. Dieser Schiebeverschluss 10 weist zudem eine angedeutete bewegliche feuerfeste Schieberplatte 8 auf, die in einer nicht näher gezeigten Einheit gehalten ist und gegen die obere Verschlussplatte 6 angepresst ist und relativ zu dieser in eine Offen- bzw. Schliessposition des Schiebeverschlusses bewegbar ist.

Beim Ausguss 5 ist erfindungsgemäss eine wegnehmbare Induktionsheizung 14 platziert, die oberhalb des Gehäuses 9 eine die Innenhülse 13 umgebende Induktionsspule 15 aufweist. Zweckmässigerweise ist dem Gehäuse 9 dabei ein Tragring 23 zugeordnet, welcher in einer im Stahlmantel 2 des Ofens 1 befestigten Halteplatte 2' fixiert ist.

Um die Heizwirkung der Induktionsspule 15 im Ausgangskanal 12 des Ausgusses zu optimieren, ist in der Innenhülse 13 ein ringförmiger Einsatz 30 aus Graphit oder graphithaltigem Material im Bereich der Induktionsspule 15 vorgesehen. Der Einsatz 30 ist rückseitig und/oder auf beiden Stirnseiten vorteilhaft mit einer Isolationsschicht versehen.

Die Innenhülse 13 ist im Bereich des Einsatzes 30 mit einer Hartschicht 31, vorzugsweise aus Tonerde Al₂O₃ oder SiC versehen, mit welcher die Innenfläche des Einsatzes gegen die abfliessende Schmelze und/oder die Schlacke und/oder oxidierendes Gas, wie zum Beispiel Luft, geschützt ist. Die Hartschicht 31 kann gegebenenfalls über den ringförmigen Einsatz 30 hinaus verlängert sein. Zur Erleichterung des Einbaus ist die Innenhülse 13 in dem Gehäuse 9 und in dem Distanzring 24 zentriert und von aussen in den Lochstein 11 eingesetzt.

Wie aus Fig. 2 ersichtlich, ist die Induktionsspule 15 in einem Tragkörper 17 aus ferritischem Material eingebettet. Der Tragkörper 17 mit den ihn umgebenden Kühlkammern 18, 19 sind in der Tragplatte 23 eingebaut. Ferner ist die Induktionsheizung 14 an den Rück- und Seitenwänden vorteilhaft mit einer Isolationsschicht umhüllt. Zudem ist zwischen diesem Tragkörper 17 und dem Schiebeverschluss 10 ein Distanzring 24 vorzugsweise aus Kupfermaterial eingelegt. Dieser Distanzring 24 dient gleichsam als Zentrierung der Innenhülse 13 im Ausguss 5. Es könnten aber auch zwei separate Ringe vorgesehen sein. Zwischen der Tragplatte 23, der Halteplatte 2' und dem Gehäuse 9 ist auch eine längsverlaufende Leitung mit einer Nut oder dergleichen zur Aufnahme wenigstens einer Leitung 26, wie eine Strom- und Kühlmittelleitung, für die Induktionsspule 15 vorgesehen.

Das Gehäuse 9 ist an der Tragplatte 23 bzw. der Halteplatte 2' befestigt und kann zusammen und mit der Innenhülse 13 getrennt von der Induktionsheizung 14 mit dem Tragkörper 17, der Induktionsspule 15 und den Kühlkammern 18, 19 ein- und ausgebaut werden.

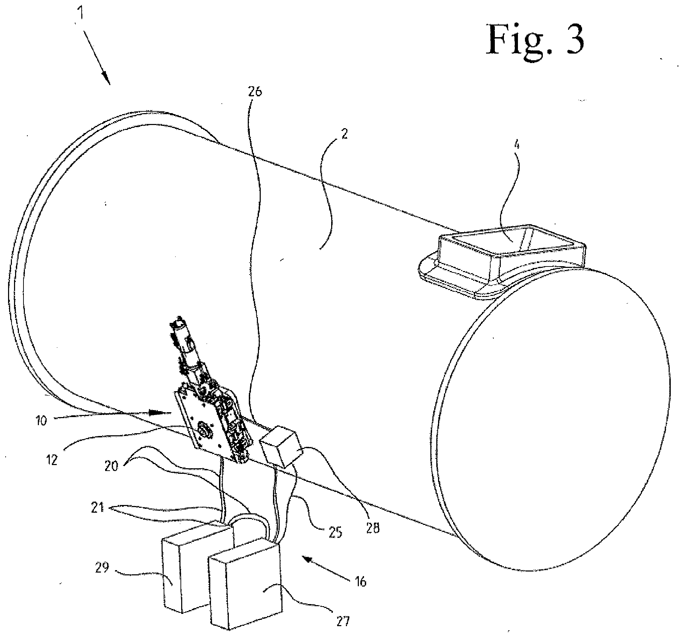

Fig. 3 verdeutlicht einen Kupfer-Anodenofen 1 mit einem an seinem Ausguss angebauten Schiebeverschluss 10, welcher eine Ofentrommel mit einem Stahlmantel 2 und einer Einfüllöffnung 4 umfasst. Die in dem Ofen durch eine spezielle Behandlung gereinigte Kupferschmelze wird anschliessend durch den Schiebeverschluss 10 abgegossen, der am Ausguss am Umfang der Ofentrommel montiert ist.

Bei dem Kupfer-Anodenofen 1 sind für den Betrieb der Induktionsheizung 14 im Ausguss vorzugsweise ein externer Generator 27 sowie ein mit diesem via Leitungen 25 verbundener Transformator 28 vorgesehen, wobei letzterer zum Beispiel am Ofen 1 angebracht ist. Zudem ist diese vom Transformator 28 zu der Induktionsspule 15 führende Stromleitung 26 sowie die Kühlleitung vorgesehen. Der Generator und der Transformator könnten auch als eine Baueinheit gebildet sein und am Ofen angebracht oder separat von diesem stationiert sein.

Mittels eines Kühlsystems 16 mit einem Kühlaggregat 29 und Zu- und Rückleitungen 20, 21 werden zum einen Kühlmittel in die Induktionsspule 15 und die Kühlkammern 18, 19 der Induktionsheizung 14 und zum andern zu dem Generator 27 und dem Transformator 28 mit einer ausreichenden Kühlleistung gefördert.

Die Erfindung ist grundsätzlich auch bei allen metallurgischen Öfen anwendbar, deren Ausguss mit einem am Ausgussende angeordneten Schiebeverschluss versehen ist.

Die erfindungsgemässe Induktionsheizung 14 wird entweder manuell oder automatisch im Zusammenwirken mit der Betätigungseinrichtung des Schiebeverschlusses aktiviert. Je nach Art oder Aufbau des Ofens kann sie auch mehrere über die Länge des Ausgusses verteilte Induktionsspulen beinhalten.

Als weiterer Vorteil kann die Induktionsspule gleichsam als Schlackensensor für die zumindest am Ende des Abgiessens in den Ausguss gelangende Schlacke verwendet werden. Sobald elektrisch nichtleitende Schlacke in den Ausgusskanal einfliesst, verändert sich der elektrische Widerstand der Schmelze, womit dies via den induzierten Strom der Induktionsspule erkannt und der Schiebeverschluss automatisch geschlossen werden kann. Es könnte dabei noch wenigstens eine zusätzliche Spule als Referenzspule oder ähnlichem verwendet werden, indem diese Referenzspule ähnlich einer Messspule eingesetzt werden kann.

Mit einer solchen Induktionsspule kann ausserdem festgestellt werden, ob Schmelze oder verfestigte Schmelze und/oder Stopfmasse und der Anteile im Ausgusskanal enthalten sind.

## Patentansprüche

1. Schiebeverschluss-Einheit am Ausguss eines metallurgischen Gefässes, vorzugsweise eines Kupfer-Anodenofens (1), mit einem Gehäuse (9), in welchem feuerfeste Verschlussplatten (6, 8) sowie wenigstens eine anschliessende feuerfeste Innenhülse (13) angeordnet sind, wobei eine Induktionsheizung (14) vorgesehen ist, **dadurch gekennzeichnet, dass**
die Induktionsheizung (14) wenigstens eine ausserhalb und/oder innerhalb des Gehäuses (9) zumindest teilweise die mindestens eine feuerfeste Innenhülse (13) umgebende Induktionsspule (15) mit diese ummantelnde Kühlkammern (18, 19) aufweist, wobei die Induktionsspule (15) in einem Tragkörper (17) aus ferritischem Material eingebettet ist und mit der den Tragkörper (17) peripherisch umschliessenden Kühlkammer (18) und der an der zum Gefäss hin gerichteten Seitenwand des Tragkörpers angrenzenden Kühlkammer (19) versehen ist, wobei der Tragkörper (17) mit den ihn umgebenden Kühlkammern (18, 19) in einer beim Ausguss (5) befestigten Tragplatte (23) wegnehmbar eingebaut ist, wobei zwischen dieser und dem Schiebeverschluss (6) ein sich gegen den Tragkörper (17) abstützender Distanzring (24) eingelegt ist.

2. Schiebeverschluss-Einheit nach Anspruch 1, **dadurch gekennzeichnet, dass**
die Induktionsspule (15) und die Kühlkammern (18, 19) der Induktionsheizung (14) mit einem Kühlmittel durch ein Kühlsystem (16) mit einem Kühlaggregat (29) in der Umgebung des Gefässes gespeist werden.

3. Schiebeverschluss-Einheit nach Anspruch 2, **dadurch gekennzeichnet, dass** das Kühlsystem (16) mit dem Kühlaggregat (29) auch einen Generator (27) und einen Transformator (28) für die Stromversorgung der Induktionsspule (15) mit einem Kühlmittel versorgt.

4. Ausguss an einem metallurgischen Gefäss mit einer Schiebeverschluss-Einheit nach einem der Ansprüche 1 bis 3, mit einem in der feuerfesten Ofenauskleidung angeordneten Lochstein, **dadurch gekennzeichnet, dass**
der Lochstein (11) mit einer den Ausgangskanal (12) des Ausgusses bildenden feuerfesten Innenhülse (13) verbunden ist, die im Bereich der Induktionsspule (15) mit einem ringförmigen Feuerfesteinsatz (30) aus Graphit oder graphithaltigem Material versehen ist.

5. Ausguss nach Anspruch 4, **dadurch gekennzeichnet, dass** die Innenfläche des Einsatzes mit einer schützenden Hartschicht (31), vorzugsweise aus Tonerde oder SiC, versehen ist.

6. Ausguss nach Anspruch 5, **dadurch gekennzeichnet, dass** die Hartschicht (31) über den ringförmigen Einsatz (30) hinaus verlängert ist.

7. Ausguss nach einem der vorhergehenden Ansprüche 4-6, **dadurch gekennzeichnet, dass**
die mindestens eine Innenhülse (13) mit dem Einsatz (30) von aussen in den Lochstein (11) einsetzbar ist.

8. Verfahren zum Feststellen von Schlacke im Ausguss eines metallurgischen Gefässes, mit einer Schiebeverschluss-Einheit am Ausguss nach einem der vorhergehenden Ansprüche 1-3, **dadurch gekennzeichnet, dass**
die Induktionsspule (15) als Schlackensensor für die am Ende des Abgiessens in den Ausguss gelangende Schlacke verwendet wird, bei dem die in den Ausgusskanal einfliessende Schlacke via den induzierten Strom der Induktionsspule (15) erkannt und der Schiebeverschluss automatisch geschlossen wird.

9. Verfahren nach Anspruch 8, **dadurch gekennzeichnet, dass** wenigstens eine zusätzliche Spule als Referenzspule für den Schlackensensor in der Induktionsheizung (14) enthalten ist.

## Claims

1. Slide closure unit on the spout of a metallurgical vessel, preferably a copper-anode furnace (1), comprising a housing (9), in which refractory closure plates (6, 8) as well as at least one connecting refractory inner nozzle (13) are arranged, whereby a removable induction heater (14) is provided, **characterised in that**
the induction heater (14) having at least one induction coil (15) at least partially surrounding the at least one refractory inner nozzle (13) outside of and/or within the housing (9), whereby the induction coil (15) with these encasing cooling chambers (18, 19) is embedded in a supporting body (17) made of ferritic material and is provided with the cooling chamber (18) that encloses the supporting body (17) peripherally and with the cooling chamber (19) adjacent to the side wall of the supporting body directed towards the vessel, whereby the supporting body (17), along with the cooling chambers (18, 19) surrounding it, is fitted removably in a support plate (23) fastened to the spout (5), whereby a spacer ring (24) supported against the supporting body (17) being inserted between said support plate and the slide closure (6).

2. Slide closure unit according to Claim 1, **characterised in that**
the induction coil (15) and the cooling chambers (18, 19) of the induction heater (14) are fed with a coolant by means of a cooling system (16) that has a cooling unit (29) in the vicinity of the furnace.

3. Slide closure unit according to Claim 2, **characterised in that**
the cooling system (16) with the cooling unit (29) also supplies a generator (27) and a transformer (28) to supply the power supply of the induction coil (15) with a coolant.

4. Spout on a metallurgical vessel having a slide closure unit according to any one of the Claims 1 or 3, having a well block disposed in the refractory furnace lining, **characterised in that**
the well block (11) is connected to a refractory inner nozzle (13) forming the outlet channel (12) of the spout, which inner nozzle (13) is provided in the region of the induction coil (15) with an annular refractory insert (30) made of graphite or material containing graphite.

5. Spout according to Claim 4, **characterised in that**
the inner surface of the insert is produced with a protecting hard layer (31), preferably made of clay or SiC.

6. Spout according to Claim 5, **characterised in that**
the hard layer (31) is extended beyond the annular insert (30).

7. Spout according to any one of the preceding Claims 4 to 6, **characterised in that**
the at least one inner nozzle (13) with the insert (30) can be inserted into the well block (11) from the outside.

8. Method for detecting slag in a spout of a metallurgical vessel, with a slide closure unit on the spout according to any one of the preceding Claims 1 to 3, **characterised in that**
the induction coil (15) is used as slag sensor for the slag, which is reaching into the spout at the end of the casting, with which the slag, which is flowing into the spout channel, is being detected and the slide closure will be closed automatically.

9. Method according to Claim 8, **characterised in that**
at least one additional coil as reference coil is included for the slag sensor in the induction heater (14).

## Revendications

1. Unité de fermeture coulissante à la busette d'un récipient métallurgique, de préférence d'un four (1) à anode en cuivre, comprenant une enveloppe (9), dans laquelle des plaques (6, 8) de fermeture réfractaires ainsi qu'au moins un manchon (13) intérieur réfractaire se raccordant sont disposés, un chauffage (14) par induction étant prévu, **caractérisée en ce que**
le chauffage (14) par induction a au moins une bobine (16) d'induction entourant, à l'extérieur et/ou à l'intérieur de l'enveloppe (9), au moins en partie le au moins un manchon (13) intérieur réfractaire et ayant des chambres (18, 19) de refroidissement entourant la bobine (15) d'induction, la bobine (15) d'induction étant incorporée dans un corps (17) de support en matériau ferritique et étant pourvue de la chambre (18) de refroidissement entourant périphériquement le corps (17) de support, et de la chambre (19) de refroidissement voisine de la paroi latérale, tournée vers le récipient, du corps de support, le corps (17) de support, avec les chambres (18, 19) de refroidissement qui l'entourent, étant incorporé avec possibilité d'être retiré dans une plaque (23) de support fixée à la busette (5), un anneau (24) d'entretoisement s'appuyant sur le corps (17) de support étant inséré entre la plaquel (23) de support et la fermeture (6) coulissante.

2. Unité de fermeture coulissante suivant la revendication 1, **caractérisée en ce que**
la bobine (15) d'induction et les chambres (18, 19) de refroidissement du chauffage (14) à induction sont alimentées en un fluide réfrigérant par un système (16) de refroidissement ayant un groupe (29) de refroidissement à l'entour du récipient.

3. Unité de fermeture coulissante suivant la revendication 2, **caractérisée en ce que**
le système (16) de refroidissement alimente en fluide réfrigérant, par le groupe (29) de refroidissement, également un générateur (27) et un transformateur (28) d'alimentation en courant de la bobine (15) d'induction.

4. Busette sur un récipient métallurgique ayant une unité de fermeture coulissante suivant l'une des revendications 1 à 3, comprenant une brique perforée montée dans un habillage réfractaire de four, **caractérisée en ce que**
la brique (11) perforée est reliée à un manchon (13) intérieur réfractaire formant le conduit (12) de sortie de la busette et pourvu, dans la région de la bobine (15) d'induction, d'un insert (30) annulaire réfractaire en graphite ou en matériau contenant du graphite.

5. Busette suivant la revendication 4, **caractérisée en ce que** la surface intérieure de l'insert est pourvue d'une couche (31) dure de protection, de préférence en alumine ou en SiC.

6. Busette suivant la revendication 5, **caractérisée en ce que** la couche (3) dure se prolonge au-delà de l'insert (30) annulaire.

7. Busette suivant l'une des revendications précédentes, **caractérisée en ce que**
le au moins un manchon (13) intérieur peut être inséré avec l'insert (30) de l'extérieur dans la brique (11) perforée.

8. Procédé pour constater la présence de scorie dans la busette d'un récipient métallurgique, comprenant une unité de fermeture coulissante à la busette suivant l'une des revendications 1 à 3 précédentes, **caractérisé en ce que**
on utilise la bobine (15) d'induction comme capteur de la scorie arrivant à la fin de la coulée dans la busette, dans lequel on détecte la scorie entrant dans le conduit de la busette par l'intermédiaire du courant induit de la bobine (15) d'induction et on ferme automatiquement la fermeture coulissante.

9. Procédé suivant la revendication 8, **caractérisé en ce qu'** il est prévu au moins une bobine supplémentaire comme bobine de référence pour le capteur de scorie dans le chauffage (14) par induction.
